# EUROPEAN PATENT SPECIFICATION

(11) **EP 1 428 356 B1**
(45) Date of publication and mention of the grant of the patent: **25.04.2007**
(21) Application number: 01963685.1
(22) Date of filing: 07.09.2001
(51) Int. Cl.: H04L 12/56, H04Q 7/38

(54) **METHOD AND ARRANGEMENTS TO ACHIEVE A DYNAMIC RESOURCE DISTRIBUTION POLICY IN PACKET BASED COMMUNICATION NETWORKS**
VERFAHREN UND ANORDNUNGEN ZUR ERZIELUNG EINER DYNAMISCHEN BETRIEBSMITTELVERTEILUNGSRICHTLINIE IN PAKETGESTÜTZTEN KOMMUNIKATIONSNETZEN
PROCEDES ET MECANISMES PERMETTANT D'APPLIQUER UNE POLITIQUE DE DISTRIBUTION DYNAMIQUE DES RESSOURCES DANS DES RESEAUX DE COMMUNICATION A COMMUTATION PAR PAQUETS

(43) Date of publication of application: 16.06.2004
(73) Proprietor: TELEFONAKTIEBOLAGET LM ERICSSON (publ), 164 83 Stockholm (SE)
(72) Inventor: JOHANSSON, Staffan, S-974 55 Lulea (SE); JANNOK, Daniel, S-972 34 Lulea (SE); MARKLUND, Daniel, S-974 41 Lulea (SE)
(74) Representative: Kühn, Friedrich Heinrich
(86) International application number: PCT/SE2001/001929
(87) International publication number: WO 2003/024034

(56) References cited:
- WO-A1-00/38468
- WO-A1-01/28167
- WO-A1-02/07473
- DE-A1- 19 726 101
- US-A- 5 914 945
- US-A- 5 982 748

## Description

### FIELD OF THE INVENTION

The present invention relates to a method and arrangements to achieve a dynamic resource distribution policy in packet based communication networks applying service differentiation and packet scheduling.

### BACKGROUND OF THE INVENTION

Communication networks that comply with the UMTS (Universal Mobile Telecommunications System) standard will introduce Internet Protocol (IP) technology in the UMTS Terrestrial Radio Access Network (UTRAN). IP has the advantage to be a simple communication protocol that fits various types of network environments; however, it does not have any functionality for network resource administration or gives any guarantees, e.g. with regard to delay or delivery of packets. Thus, in a UTRAN that bases on IP only, all data streams compete with each other and resources are distributed such that a data packet that comes first to a link will be served first, i.e. all packets are treated equally. However, as the UTRAN must support both network traffic with real-time and non-real-time characteristics it is desirable to be able to distribute network resources in such a way that the requirements for the various types of traffic are fulfilled while at the same time using the network resources as efficiently as possible. Therefore, in order to avoid situations with unpredictable delays and congestions as experienced in a stand-alone IP-network, the capacity of the network must have comparably large margins to the estimated maximum load. For real-time traffic in particular it is crucial that the network is always under control with respect to, e.g., delivery delays or resource usage.

There have been defined four types of traffic classes for the UTRAN environment: The traffic class "conversational" refers to bidirectional communication between two humans, i.e. speech. Another traffic class, "streaming", refers to communication between a computer and a human, e.g. transmission of video data. A third traffic class "interactive" denotes traffic between two computers, e.g. Internet-related exchange of information. Finally, a fourth traffic class denotes "background" traffic that relates to, e.g., the transfer of shorter messages or various kinds of supervision messages. Each traffic class has specific requirements on throughput, delay, delay variations, bit error rates, packet loss etc. However, a stand-alone IP-network does not provide the ability to make any kind of service differentiation between the various traffic classes. Consequently, all traffic classes must be given a service matching the subset of traffic classes that have the highest requirements.

Apparently, it would be desirable to provide the ability to categorise IP-packets and to recognise the kind of service that should be given to the IP-packets at each node. This would imply that the nodes in UTRAN can differentiate the level of service that should be given to the traffic classes mentioned above. This is described in the document "An Architecture for Differentiated Services" (RFC 2475) by S. Blake et al. which has been proposed to the IETF (Internet Engineering Task Force) in December 1998.

Packet scheduling can be used to distribute the transmission link resources among a number of traffic classes. Desirable properties for packet scheduling algorithms are the ability to control the maximum amount of the link resources that a traffic class can use and the ability to give a guaranteed level of service. The configuration for how a packet scheduling algorithm should distribute the resources between said traffic classes is static but can be changed with appropriate network planning tools see for example WO 0 128 167.

The present invention makes also use of Load Control technique which can be used for Unit Based Reservations (UBR). Basically, Load Control is a technique that provides a mechanism to give a simple load feedback upon access request. This has been described in a working document "Load Control of Real-Time Traffic" by L. Westberg et al. which has been proposed to the IETF (Internet Engineering Task Force) on April 19, 2000. UBR denotes a reservation of one network resource unit for one refresh period, which can be defined as any finite period in time. A reservation for one UBR-unit is established in one direction between two points in a network by sending a Load Control refresh packet from one end point towards the other end point. Each node that receives a refresh packet reserves one UBR-unit resource for the traffic stream to which the refresh packet belongs. Correspondingly, a reservation of two UBR-units for one refresh period is done by sending two refresh packets. A reservation can be extended for one refresh period by sending new refresh packets at the end of each refresh period. An IP-packet is recognised as a refresh packet by help of the status of two unused bits in the Type Of Service field of the IP-header. Therefore, any IP-packet towards the desired destination can be used as a refresh packet. It is thus one major advantage of the Unit Based Reservation (UBR) in Load Control that it does not add any overhead to the network traffic.

### SUMMARY OF THE INVENTION

The present invention deals with the problem to achieve an efficient resource distribution in packet-based communication networks, e.g. an IP-based network. However, for this it is crucial to know for which kinds of traffic resources must be allocated. The user level traffic, e.g., in a UMTS-Radio Access Network is a traffic mix that can be divided into different traffic classes based on their service requirements. Network resources can then be distributed in such a way that all traffic can get their demands fulfilled. This implies some kind of a packet scheduling algorithm which is, however, more or less static while the scheduled traffic is dynamic and can vary over time and network part.

It is thus an object of the present invention to achieve a method for establishing an efficient and dynamic resource distribution policy for an IP-based communication network which is able to react quickly on the various resource needs of traffic classes on the one hand and, on the other hand, to adapt a long term resource distribution for said traffic classes that remains relatively stable.

This is advantageously solved by the teaching of claim 1.

It is another object of the present invention to achieve arrangements that are capable to perform the method according to the present invention.

This is advantageously solved by the teaching of claims 9 and 10.

Briefly, these and other objects of the present invention are accomplished by the arrangement and method according to the present invention comprising a dynamic resource distribution policy for the various transmission paths of a communication network. The method initially allocates for each traffic class and, if required, for the transmission paths a certain share of the available resources, e.g. in terms of a share of the transmission bandwidth. Then, an arrangement, which is located at the site of the Radio Network Controller, monitors the actual traffic shares for each of the traffic classes in comparison with these assigned shares. If the monitored traffic shares does not correspond to the assigned shares a reconfiguration algorithm is started that equalises resources according to the actual need. The new resource distribution policy is then distributed to the affected network nodes by means of a sequence of Load Control refresh packets where the shares of packets that belong to the various traffic classes correspond to the resource shares that are assigned to these traffic classes in the new resource distribution policy.

It is a first advantage of the present invention that available network resources can be used more efficiently, i.e. with lesser margins.

It is another advantage of the present invention that temporary violations of an established resource distribution policy are avoided, i.e. there is no borrowing of resources that have been allocated to other traffic classes. Each traffic class has therefore a guaranteed access to its assigned resource share, which reduces the risk of cut-offs for certain calls.

It is still another advantage of the present invention that the network operator has an improved control of both the traffic shares and resource need for each traffic class and improved flexibility for updating the resource distribution policy. It is possible to distinguish traffic according to a variety of categories, e.g. traffic class and transmission path, and apply different resource distribution policies for these categories.

Other objects, advantages and novel features of the invention will become apparent from the following detailed description of the invention when considered in conjunction with the accompanying drawings and claims.

### BRIEF DESCRIPTION OF THE DRAWINGS

For a better understanding, reference is made to the following drawings and preferred embodiments of the invention.
Figure 1 shows a part of an IP-based radio access network consisting of a plurality of transmission links that form transmission paths between a radio network controller and a plurality of radio base stations.
Figure 2 illustrates an initial resource distribution policy for a transmission link that assigns certain resource shares α(i,p₂) to each traffic class.
Figures 3 shows an arrangement, which is either incorporated in or connected to the Radio Network Controller, comprising units for monitoring the IP-based traffic in the radio access network and for reconfiguring the resource distribution policy in said network.
Figure 4 shows an arrangement in a network node that is responsible for implementing the new resource allocation policy in the network node.
Figures 5a-5d show the various method steps that are performed in the arrangement according to figure 3.
Figure 6a-6b show the various method steps that are performed in the arrangement according to figure 4.

### DETAILED DESCRIPTION

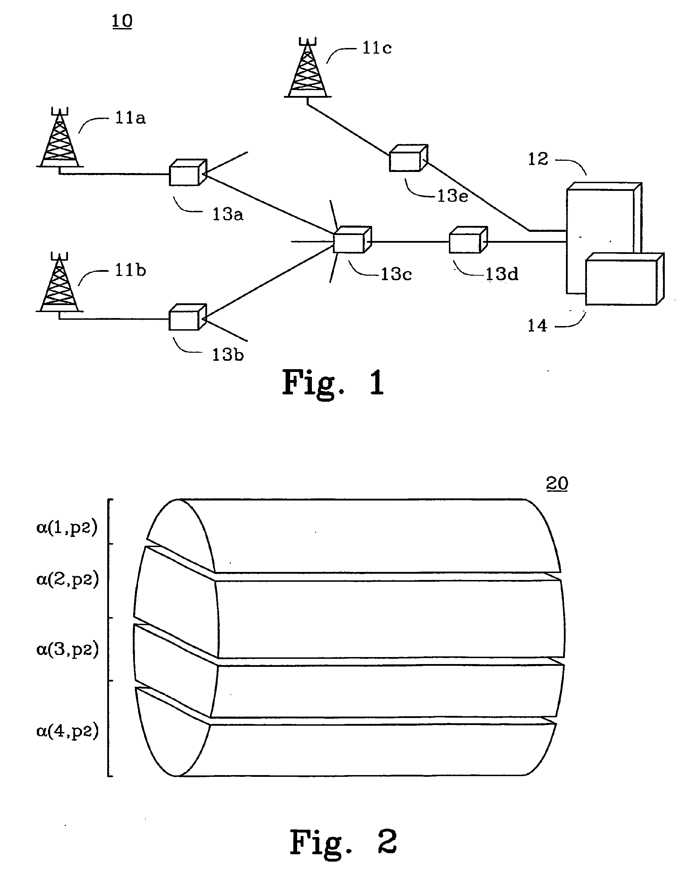

Figure 1 shows a part of a communication network 10 within which the method according to the present invention can be performed. In this figure said network 10 consists of a UMTS terrestrial radio network (UTRAN) comprising a plurality of radio base stations 11a-11c that are connected to a common radio network controller 12 by means of transmission paths and communicate with each other by help of an IP-based communication protocol. However, it is notwithstanding possible to apply the inventive method on other kinds of packet-data networks. The radio base stations 11a-11c can be connected directly to said radio network controller 12, e.g. radio base station 11c, or by partly using the same transmission paths, e.g. radio base stations 11a, 11b. The IP-based traffic between radio base stations 11a-11c and radio network controller 12 is controlled and forwarded via network units 13a-13e. A resource distribution policy for the entire or parts of such a network 10 is established and controlled by a resource control unit 14 which performs the method according to the present invention. Said unit 14 is preferably incorporated in the radio network controller 12 but could also be located at another location on the assumption that said unit 14 can from this location access those transmission paths that shall be controlled.

The resource distribution policy according to the present invention focuses primarily on an allocation of network resources to various classes of traffic as defined above. In general, network resources can be interpreted as the processing capacity of network facilities, e.g. transmission links or network nodes, that are reserved for and used by the various communication connections in the network. Examples of resources are, e.g., the available transmission bandwidth or the network node buffer space. In the following, resources will be illustrated as the available transmission rates for each of said traffic classes. Apart from their traffic class the IP-based traffic can be categorised by other parameters which is here indicated by means of a vector p: A first vector element p₁ denotes, e.g., the traffic class to which the IP-packet belongs. This information can be indicated, e.g., in the Type Of Service field of the IP-header. A second vector element p₂ can specify the entire or parts of the network, either a group of transmission paths, e.g. to Radio Base Stations 11a,11b, or a single transmission path, e.g. to Radio Base Station 11c, for which the resource distribution policy shall be valid. This information can be retrieved from the source and destination addresses, which are indicated in the IP-header. Still another conceivable criterion could be to distinguish whether an IP-packet is sent via the uplink or downlink of a transmission path. The distinguishing traffic categories are definable by the network operator, i.e. it is up to the network operator to determine which and how many categories should be considered.

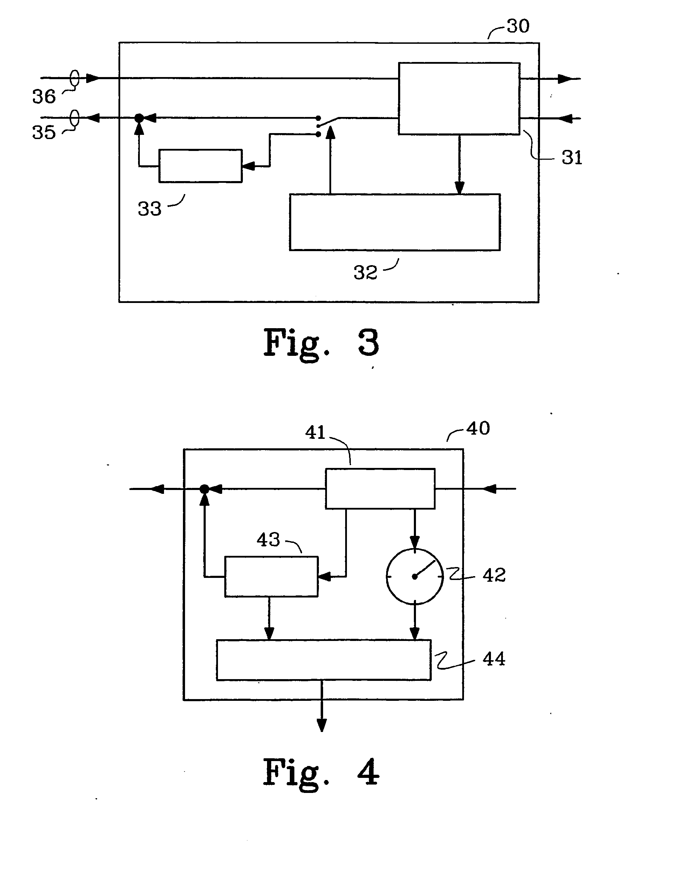

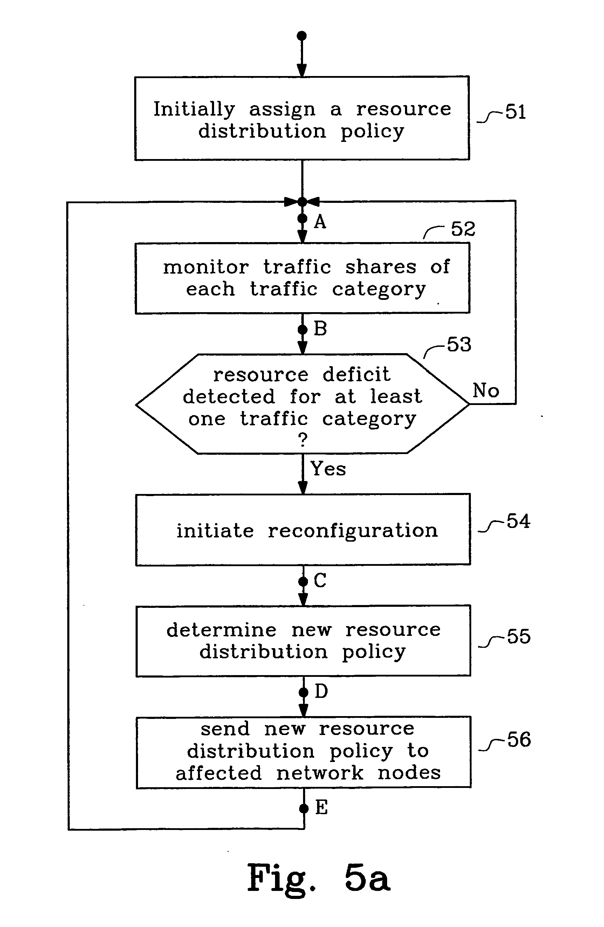

Figure 3 shows an arrangement 30 corresponding to the unit 14 in figure 1, which is incorporated in said resource control unit 14, for performing the method steps according to the present invention as described in figures 5a-5d. Said arrangement 30 contains or can access a traffic monitoring unit 31 which monitors all IP-traffic that passes the Radio Network Controller on the downlink 35 and uplink 36. For this purpose the monitoring unit 31 keeps track on a set of counters for each of the various traffic categories, e.g. for each traffic class and transmission path. If the monitoring unit 31 detects a resource deficit for at least one of said categories, i.e. the counter for this category exceeds an allowed threshold value, it informs a reconfiguration unit 32 which is intended to calculate a new resource distribution policy on basis of the actually monitored traffic. This policy redefines the new resource shares for the various traffic classes, which can be further specified, e.g., for various transmission paths depending on the needs of the network operator. The reconfiguration unit 32 then initiates the start of a refresh period of a certain length that is known to all network nodes that can be affected by the reconfiguration of the resource policy and during which a certain number of specially marked IP-refresh packets is sent. The marking is achieved by sending the IP-packets during said refresh period through a marking unit 33 and thus make them Load Control refresh packets. The sequence of refresh packets is chosen in such a way that the shares of packets that belong to the various traffic classes correspond to the resource share values for these classes in the new resource distribution policy. Supposing, e.g., a sequence of 10 IP-packets that are sent during a refresh period and marked as refresh packets by said marker unit 34 where each IP-packet contains a Differentiated Service Identifier in order to distinguish the various traffic classes. If said sequence contains 4 IP-packets that belong to one of the traffic classes this can be interpreted that 4/10=40% of the link resources should be allocated for this traffic class. The share values for the other traffic classes are determined correspondingly. This sequence of marked IP-packets is then transmitted via the downlink 35 to counter units 40 at the site of the network nodes that are affected by a change of the resource distribution policy.

Figure 4 shows an arrangement 40, which is incorporated in or connected to a network node and responsible for implementing the new resource distribution policy in said network node. Said arrangement 40 contains a monitoring and detection unit 41 that monitors all IP-packets that are received from the downlink and starts, if not already running, a timer 42 for the length of one refresh period if it has received a marked IP-packet that indicates the start of a refresh period. Marked IP-packets that are received during said refresh period are forwarded to a determination unit 43 which analyses the Type Of Service field of the IP-header in order to determine, e.g., the traffic class of the IP-packet and increments the counter that counts the number of packets of this traffic class during the refresh period. When the timer 42 that measures the refresh period has elapsed, a scheduler 44 in said arrangement 40 compares the number of counted refresh packets for each of the various types of traffic classes with the total number of sent refresh packets and calculates from the percentage of refresh packets that belong to the various traffic classes the new share values for these traffic classes.

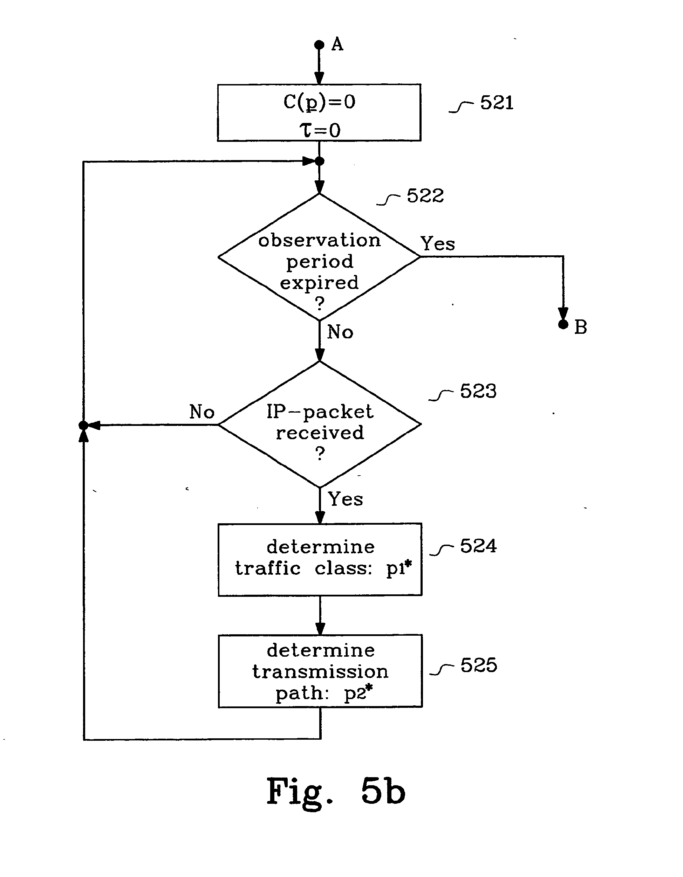

Figures 5a-5d show flowcharts that describe the method according to the present invention for dynamically determining a resource distribution policy for an IP-based radio access network 10 as shown in figure 1. These method steps are performed in the traffic monitoring unit 31 and the reconfiguration unit 32 which are located in the resource control unit 14 at the site of the Radio Network Controller 12. Figure 5a shows an overview of said method steps while figures 5b-5d explain the method steps in greater detail. Figures 4a and 4b show the necessary method steps that are performed in the nodes of said network in order to implement the new resource distribution policy.

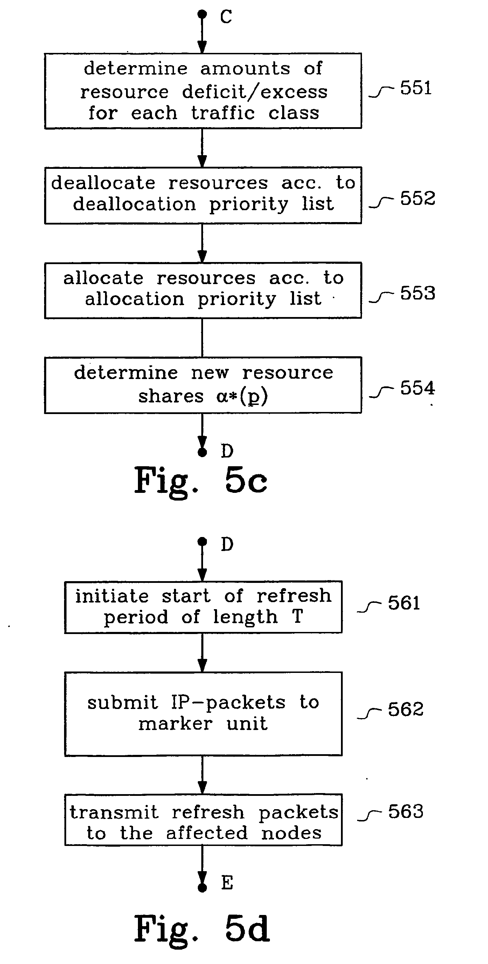

Regarding figure 5a, a resource distribution policy is initially established by means of assigning resource share values α(p) to each of the traffic categories that are distinguishable by help of the above defined parameter vector p, block 51, e.g. a parameter pi for the traffic class and a parameter p₂ that denotes a certain transmission path. These initial values denote the maximum share that is guaranteed to said sections. An example of an initial resource distribution policy is illustrated in figure 2: For a transmission link 20, which is characterised by a parameter p₂, of the network that is to be controlled, α(1,p₂)=30% of the resources are allocated to conversational traffic and α(2,p₂)=30% to streaming traffic; α(3,p₂)=20% are allocated to interactive traffic and another 20% (=α(4,p₂)) to background traffic. Optionally, it would also be possible to assign specific minimum share values to each category which denotes the share that is always guaranteed to a category; however, for a simplified approach it is sufficient to define the actual monitored share of a traffic class as the minimum share that must be guaranteed. The share values α(p) are selected with regard to, e.g., the characteristics of the various traffic classes. Each of said classes has various demands on bandwidth, delay sensitivity, or burstiness of the traffic which requires certain shares of resources. In addition to this, the network operator can include experiences regarding, inter alia, the amount and kind of traffic and their distribution in time. This can provide good average values of the distribution of resources for the whole or parts of the network. In a next step, block 52, the actual traffic is monitored and categorised with regard to the parameter vector p as specified above. This will be explained in greater detail in figure 5b. The monitoring is proceeded as long as the monitored traffic for each of the traffic categories does not exceed the allocated shares, block 53 No. A resource deficit is detected if the traffic that belongs to one of said categories exceeds the allocated share of the maximum amount of resources, block 53 Yes. Instead of a temporary borrowing of momentary unused resources, e.g., from other traffic classes, the method according to the present invention will initiate a reconfiguration of the resource distribution policy for the traffic classes of those transmission paths that are affected by said deficits, block 54. Said reconfiguration is done by means of determining new share values for said traffic classes, block 55, and distributing the information of said share values to the affected network nodes, block 56. This will be explained in greater detail in figures 5c and 5d. Then, the traffic is monitored again with respect to the new resource shares, block 52.

Figure 5b shows in greater detail the method steps that are performed in order to monitor the actual shares of the various traffic categories on the total traffic. Said monitoring is done by means of counting and analysing each IP-packet according to the above mentioned categories. For this purpose, the resource monitoring unit 31 provides a matrix of counters C(p) for each of the above mentioned categories. Initially, all values of said matrix C(p) are set to zero, block 521. Traffic measurements are performed within observation periods of an appropriate length τₘₐₓ where the elapsed time of an observation period is measured by a counter τ, which initially is also set to zero, block 521.

Observation periods of a given length τₘₐₓ allow to calculate the actual bit rate during said period and compare it to the maximum transmission rate for the transmission path. The value for τₘₐₓ is selected depending on how frequent an update is desirable and, for practical reasons, to limit the range of the counter values to a reasonable size. If an IP-packet has been received by said monitoring unit, block 523 Yes, it is categorised according to the above mentioned parameters pi. In this example, for the parameter pi a value p₁* is selected with regard to the traffic class of the IP-packet, block 524, and for p₂ a value p₂* is selected that denotes one or several transmission paths via which the IP-packet will be transmitted, block 525. The received IP-packet is thus categorised by help of a parameter vector p*=(p₁*,p₂*). Accordingly, the matrix element C(p*) is increased, block 527.

Turning back to figure 5a, from the monitored traffic as represented by the counted values in said matrix C(p) it is easily possible to determine whether the monitored traffic for a traffic category causes a resource deficit or a resource excess in relation to the resources that have been assigned to said traffic category, block 53. This becomes apparent when comparing the monitored bit rate C(p)/τₘₐₓ during the observation period τₘₐₓ with the allocated resource share α(p)*Bₘₐₓ of the maximum bandwidth Bₘₐₓ: A resource deficit is thus determined for C(p)> α(p)*Bₘₐₓ*τₘₐₓ while a resource excess implies C(p)< α(p)*Bₘₐₓ*τₘₐₓ. As the values for Bₘₐₓ and τₘₐₓ normally does not change it is possible to define a threshold value that allows a simple connection between the counted number C(p) of IP-packets for each traffic category and the assigned shares α(p) of the total resources for said categories. If a resource deficit has been detected for at least one traffic category, a reconfiguration algorithm is started, block 54, in order to determine new resource shares in light of the measured resource need, which will be explained together with figure 5c, and to transmit the new resource shares to the affected network nodes, which will be explained together with figure 5d. These method steps are performed for each traffic category, i.e. the traffic classes and, if applied, the transmission paths.

Figure 5c shows the method steps that are necessary to determine a new resource distribution policy, block 55. In a first step, block 551, the actual amounts of resource excess and deficit are determined for the traffic categories: As a resource deficit for a traffic category implies that the number of IP-packets within an observation period that belong to said category exceed a defined threshold value, i.e. C(p)>α(p)*Bₘₐₓ*τₘₐₓ, it is necessary to increase the share for this category at least to a new value α*(p)=C(p)/Bₘₐₓ*τₘₐₓ to achieve a sufficient share of the total available resources Bₘₐₓ with regard to the monitored resource need. For practical purposes it is recommendable to add a certain security margin in order to avoid a too frequent updating of the resource policy. A similar reasoning is applied for a resource excess, i.e. C(p)<α(p)*Bₘₐₓ*τₘₐₓ. This means that a share α*(p)=C(p)/Bₘₐₓ*τₘₐₓ would already be sufficient to serve the momentarily monitored traffic for this traffic category. Also in this case it is recommendable to add a certain security margin. Then, block 552 and 553, it is the next step to achieve a resource equalisation between traffic classes having a resource excess and those having a resource deficit. However, one must always bear in mind that a resource equalisation in this context refers to a transfer of logically assigned resources, e.g. a bandwidth allocation to various traffic classes, but not a distribution between different physical locations in the network, e.g., various transmission paths. The following steps to perform a resource transfer between different traffic classes describe thus a resource transfer between various traffic classes that is valid only within a specified network part, e.g. the entire or parts of a network or even a single transmission path. There are several alternatives to determine from which traffic classes resources should be transferred in the first place and to which traffic classes such resources should preferably be transferred. It is one conceivable alternative to implement a deallocation priority list for the various traffic classes that defines an order in which resources shall be deallocated from the various traffic classes and a corresponding allocation priority list that defines to which traffic classes additional resources shall be allocated in the first place. Resource deallocation can be done either by means of deallocating all momentary unused resources of a traffic class or by means of deallocating resources up to a specified minimum share that should always be guaranteed to this traffic class. This can help to secure that certain traffic classes have their resource needs fulfilled as far as possible, e.g. due to a high priority for allocating resources and/or a low priority for deallocating resources. A resource equalisation is thus performed by means of deallocating resources according to said deallocation priority list, block 552, and allocating these resources according to the allocation priority list, block 553. Other alternatives for the resource equalisation can be implemented in accordance with the requirements of the network operator. The equalisation will result in the determination of new resource share values α*(p) that describe the new resource distribution policy, block 554.

Figure 5d shows the method steps to transmit the new resource distribution policy for the modified traffic categories as determined above to the nodes that are affected by this reconfiguration, block 56. This is done by means of initiating the start of a refresh period, block 561, which denominates a certain time interval T of an appropriate length that is known to all nodes and sending during said period specifically marked IP-packets, which are also used for Load Control purposes. These packets will be analysed by a counter unit in the affected nodes to which a new resource distribution policy must be reported. The principal idea is that the share of marked IP-packets that belong to a certain traffic class corresponds to the share of the total resources that should be assigned to this traffic class and is thus interpreted by a receiving node as the new share value for said traffic class. During the refresh period an appropriate number of IP-packets of each traffic class is submitted to the marker unit, block 562, and the sequence of marked IP-refresh packets that has been assembled by this means is sent to the affected nodes, block 563.

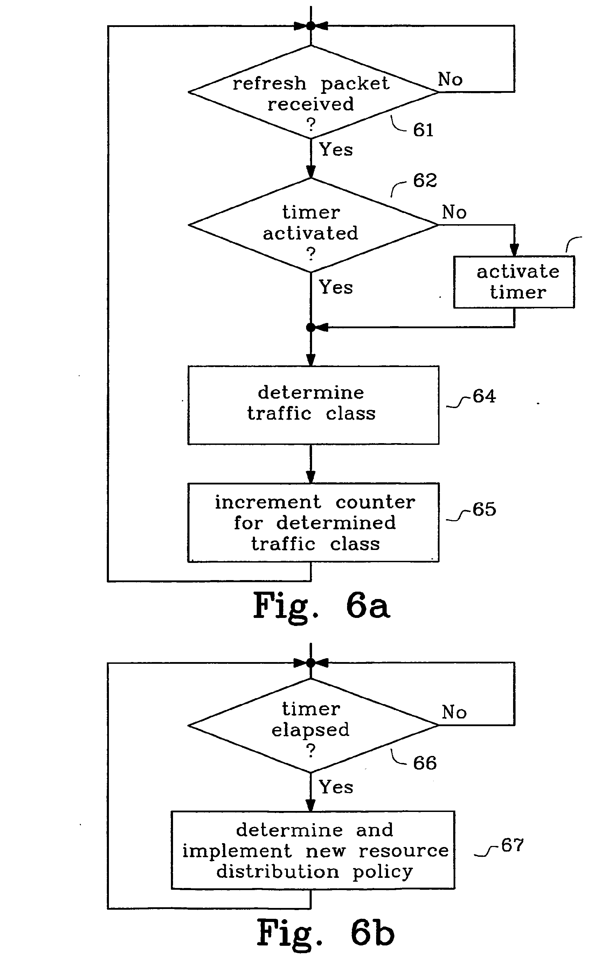

Figures 6a and 6b will now explain the method steps that are performed in each node that must be informed of a new resource distribution policy as described above. Each node that is a part of the controlled network is equipped with the arrangement 40 as shown in figure 4. When the monitoring and detection unit 41 in said arrangement 40 receives a marked IP-packet, block 61 Yes, a timer 42 is started for the length of one refresh period, block 63, if such a timer has not already been started, e.g., due to an earlier received marked IP-packet, block 62 Yes. During this time period the monitoring and detection unit 41 will receive a sequence of marked IP-packets, determining their traffic class, block 64, and increment a counter for the determined traffic class, block 65. When the timer 42 that measures the length of the refresh period has elapsed, block 66 Yes, the new resource distribution policy can be determined from the marked IP-packets that have been counted for each of the traffic classes, block 67. The new share values for each of the traffic classes can be calculated as the ratio of the counted number for a traffic class compared to the total number of received marked IP-packets. The sequences of marked IP-packets are sent several times, or even continuously, such that the receiving nodes need not to be synchronised with each other.

## Claims

1. Method in a centralised controller unit (14) of a packet-based communication network (10) comprising a plurality of network units (13a-13e) connected to said controller unit (14) by means of transmission paths providing resources in form of transmission capacity for transporting packet data, which can be categorised according to one or more user-definable criterion,
**characterised by**
initially establishing a resource distribution policy that allocates resource shares to the defined traffic categories (51),
monitoring and categorising data packets that are received during fixed observation periods (52),
determining a new resource distribution policy if the resource need for at least one of the traffic categories exceeds the allocated resource share (54),
informing the affected network nodes about the new resource distribution policy by means of sending during a refresh period a sequence of dedicated data packets, which are marked as Load Control packets, where the shares of marked data packets that belong to the various traffic classes correspond to the resource share values of the new resource distribution policy.

2. Method according to claim 1, wherein the resource distribution policy allocates maximum resource share values for the traffic categories.

3. Method according to claim 2, wherein the resource distribution policy allocates minimum resource share values for the traffic categories.

4. Method according to claim 1, wherein the packet data traffic is categorised according to its traffic class.

5. Method according to claims 4, wherein the packet data is categorised according to transmission path and transmission direction.

6. Method according to claim 1, wherein a resource deficit or excess for a traffic category is determined from the fact whether the counted number of data packets of this category during an observation period is lower or higher than a threshold value, which depends on the assigned resource share value for said category of the maximum number of packets that can be received during said observation period and
wherein a new resource share value for said category is determined from the ratio of the counted number of data packets of this category during the observation period and the maximum number of packets that can be received during said observation period.

7. Method according to claim 6, wherein a new resource distribution policy for a traffic category is established by means of deallocating resources in a first operator-definable order from traffic classes having a resource excess and allocating such resources in a second operator-definable order to traffic classes having a resource deficit.

8. Arrangement (30) in a centralised controller unit (14) of a packet-based communication network (10) comprising a plurality of network units (13a-13e) connected to said controller unit (14) by means of transmission paths providing resources in form of transmission capacity for transporting packet data, which can be categorised according to one or more user-definable criterion,
**characterised in**
a traffic monitoring unit (31) that monitors and counts the data packets that pass said centralised controller unit (14),
a reconfiguration unit (32) that calculates a new resource distribution policy on basis of the monitored traffic if the actual resource distribution policy does not comply with the monitored resource need for the various traffic categories and starts a refresh period of an appropriate length,
a marking unit (33) that marks the data packets to the affected nodes during said refresh period where the shares of marked data packets that belong to the various traffic classes correspond to the share values of the new resource distribution policy.

9. Arrangement (40) in a unit of a packet-based communication network (10) comprising a plurality of network units (13a-13e) connected to said controller unit (14) by means of transmission paths providing resources in form of transmission capacity for transporting packet data, which can be categorised according to one or more user-definable criterion,
**characterised in**
a detection unit (41) that detects incoming data packets that have been marked as refresh packets,
a timer (42) that is activated to indicate the length of a refresh period if a marked data packet has been received,
a determination unit (43) for data packets that are received during the refresh period for analysing their traffic class and counting the number of data packets that have been received for each traffic class,
a scheduler (44) that is activated after that the timer (42) has elapsed to retrieve the share values of the new resource distribution policy from the ratios of the counted numbers of marked data packets for the various traffic classes and the total number of received marked data packets during the observation period.

## Patentansprüche

1. Verfahren in einer zentralisierten Steuereinheit (14) eines paketgestützten Kommunikationsnetzes (10), umfassend eine Vielzahl von Netzeinheiten (13a-13e), die mit der Steuereinheit (14) verbunden sind durch Übertragungswege, die Ressourcen in Form von Übertragungskapazität zum Transportieren von Paketdaten, die nach einem oder mehreren benutzerdefinierbaren Kriterien kategorisiert werden können, bereitstellen, **gekennzeichnet durch**:
anfänglich Erstellen einer Ressourcenverteilungsrichtlinie, die den definierten Verkehrskategorien Ressourcenanteile zuteilt (51),
Überwachen und Kategorisieren von Datenpaketen, die in festen Beobachtungsperioden empfangen werden (52),
Bestimmen einer neuen Ressourcenverteilungsrichtlinie, wenn der Ressourcenbedarf für mindestens eine der Verkehrskategorien den zugeteilten Ressourcenanteil überschreitet (54),
Informieren der betroffenen Netzknoten über die neue Ressourcenverteilungsrichtlinie **durch** Senden einer Sequenz von dedizierten Datenpaketen, die als Laststeuerpakete **gekennzeichnet** sind, in einer Auffrischungsperiode, wobei die Anteile der gekennzeichneten Datenpakete, die zu den verschiedenen Verkehrsklassen gehören, mit den Ressourcenanteilswerten der neuen Ressourcenverteilungsrichtlinie korrespondieren.

2. Verfahren nach Anspruch 1, wobei die Ressourcenverteilungsrichtlinie maximale Ressourcenanteilswerte für die Verkehrskategorien zuteilt.

3. Verfahren nach Anspruch 2, wobei die Ressourcenverteilungsrichtlinie minimale Ressourcenanteilswerte für die Verkehrskategorien zuteilt.

4. Verfahren nach Anspruch 1, wobei der Paketdatenverkehr nach seiner Verkehrsklasse kategorisiert wird.

5. Verfahren nach Anspruch 4, wobei die Paketdaten nach Übertragungsweg und Übertragungsrichtung kategorisiert werden.

6. Verfahren nach Anspruch 1, wobei ein Ressourcendefizit oder -überschuss für eine Verkehrskategorie aus der Tatsache ermittelt wird, ob die gezählte Zahl von Datenpaketen dieser Kategorie in einer Beobachtungsperiode niedriger oder höher ist als ein Schwellenwert, der abhängig ist von dem zugewiesenen Ressourcenanteilswert für die Kategorie der maximalen Zahl von Paketen, die in der Beobachtungsperiode empfangen werden können, und
wobei ein neuer Ressourcenanteilswert für die Kategorie aus dem Verhältnis der gezählten Zahl von Datenpaketen dieser Kategorie in der Beobachtungsperiode und der maximalen Zahl von Paketen, die in der Beobachtungsperiode empfangen werden können, bestimmt wird.

7. Verfahren nach Anspruch 6, wobei eine neue Ressourcenverteilungsrichtlinie für eine Verkehrskategorie durch Freigabe von Ressourcen in einer ersten Operator-definierbaren Reihenfolge aus Verkehrsklassen, die einen Ressourcenüberschuss haben, und Zuteilen derartiger Ressourcen in einer zweiten Operator-definierbaren Reihenfolge an Verkehrsklassen, die ein Ressourcendefizit haben, erstellt wird.

8. Anordnung (30) in einer zentralisierten Steuereinheit (14) eines paketgestützten Kommunikationsnetzes (10), umfassend eine Vielzahl von Netzeinheiten (13a-13e), die mit der Steuereinheit (14) verbunden sind durch Übertragungswege, die Ressourcen in Form von Übertragungskapazität zum Transportieren von Paketdaten, die nach einem oder mehreren benutzerdefinierbaren Kriterien kategorisiert werden können, bereitstellen, **gekennzeichnet durch**:
eine Verkehrsüberwachungseinheit (31), die die Datenpakete, die die zentralisierte Steuereinheit (14) passieren, überwacht und zählt,
eine Neukonfigurierungseinheit (32), die eine neue Ressourcenverteilungsrichtlinie auf der Basis des überwachten Verkehrs berechnet, wenn die aktuelle Ressourcenverteilungsrichtlinie nicht dem überwachten Ressourcenbedarf für die verschiedenen Verkehrskategorien entspricht, und eine Auffrischungsperiode einer angemessenen Länge startet,
eine Kennzeichnungseinheit (33), die die Datenpakete an die betroffenen Knoten in der Auffrischungsperiode kennzeichnet, wobei die Anteile der gekennzeichneten Datenpakete, die zu den verschiedenen Verkehrsklassen gehören, mit den Anteilswerten der neuen Ressourcenverteilungsrichtlinie korrespondieren.

9. Anordnung (40) in einer Einheit eines paketgestützten Kommunikationsnetzes (10), umfassend eine Vielzahl von Netzeinheiten (13a-13e), die mit der Steuereinheit (14) verbunden sind durch Übertragungswege, die Ressourcen in Form von Übertragungskapazität zum Transportieren von Paketdaten, die nach einem oder mehreren benutzerdefinierbaren Kriterien kategorisiert werden können, bereitstellen, **gekennzeichnet durch**:
eine Detektionseinheit (41), die eingehende Datenpakete erkennt, die als Auffrischungspakete **gekennzeichnet** sind,
einen Zeitgeber (42), der aktiviert wird, um die Länge einer Auffrischungsperiode anzugeben, wenn ein gekennzeichnetes Datenpaket empfangen wurde,
eine Bestimmungseinheit (43) für Datenpakete, die in der Auffrischungsperiode empfangen werden, zum Analysieren ihrer Verkehrsklasse und Zählen der Zahl der Datenpakete, die für jede Verkehrsklasse empfangen wurden,
eine Ablaufsteuerung (44), die aktiviert wird, nachdem der Zeitgeber (42) abgelaufen ist, um die Anteilswerte der neuen Ressourcenverteilungsrichtlinie aus den Verhältnissen der gezählten Zahlen von gekennzeichneten Datenpaketen für die verschiedenen Verkehrsklassen und die Gesamtzahl der empfangenen gekennzeichneten Datenpakete in der Beobachtungsperiode zu ermitteln.

## Revendications

1. Procédé, dans une unité de contrôleur centralisé (14) d'un réseau de communication basé sur paquets (10) comprenant une pluralité d'unités de réseau (13a-13e) connectées à ladite unité de contrôleur (14) au moyen de voies de transmission assurant des ressources selon la forme d'une capacité de transmission pour transporter des données par paquets, lesquelles peuvent être catégorisées selon un ou plusieurs critères définissables par utilisateur, **caractérisé par**:
l'établissement initial d'une police de distribution de ressources qui alloue des partages de ressources aux catégories de trafic définies (51);
la surveillance et catégorisation de paquets de données qui sont reçus pendant des périodes d'observation fixes (52);
la détermination d'une nouvelle police de distribution de ressources si le besoin en ressources pour au moins l'une des catégories de trafic excède le partage de ressources alloué (54);
l'information des noeuds de réseau affectés en ce qui concerne la nouvelle police de distribution de ressources au moyen d'un envoi pendant une période de rafraîchissement d'une séquence de paquets de données dédiés, qui sont marqués en tant que paquets de commande de charge, où les partages de paquets de données marqués qui appartiennent aux diverses classes de trafic correspondent aux valeurs de partage de ressources de la nouvelle police de distribution de ressources.

2. Procédé selon la revendication 1, dans lequel la police de distribution de ressources alloue des valeurs de partage de ressources maximum pour les catégories de trafic.

3. Procédé selon la revendication 2, dans lequel la police de distribution de ressources alloue des valeurs de partage de ressources minimum pour les catégories de trafic.

4. Procédé selon la revendication 1, dans lequel le trafic de données par paquets est catégorisé conformément à sa classe de trafic.

5. Procédé selon la revendication 4, dans lequel les données par paquets sont catégorisées conformément à une voie de transmission et à une direction de transmission.

6. Procédé selon la revendication 1, dans lequel un déficit ou un excès en ressources pour une catégorie de trafic est déterminé à partir du fait que le nombre compté de paquets de données de cette catégorie pendant une période d'observation est inférieur ou supérieur à une valeur de seuil qui dépend de la valeur de partage de ressources assignée pour ladite catégorie du nombre maximum de paquets qui peuvent être reçus pendant ladite période d'observation et
dans lequel une nouvelle valeur de partage de ressources pour ladite catégorie est déterminée à partir du rapport du nombre compté de paquets de données de cette catégorie pendant la période d'observation et du nombre maximum de paquets qui peuvent être reçus pendant ladite période d'observation.

7. Procédé selon la revendication 6, dans lequel une nouvelle police de distribution de ressources pour une catégorie de trafic est établie au moyen d'une désallocation de ressources selon un premier ordre définissable par opérateur à partir de classes de trafic présentant un excès en ressources et au moyen d'une allocation de ces ressources selon un second ordre définissable par opérateur sur des classes de trafic présentant un déficit en ressources.

8. Agencement (30), dans une unité de contrôleur centralisé (14) d'un réseau de communication basé sur paquets (10) comprenant une pluralité d'unités de réseau (13a-13e) connectées à ladite unité de contrôleur (14) au moyen de voies de transmission assurant des ressources selon la forme d'une capacité de transmission pour transporter des données par paquets, lesquelles peuvent être catégorisées selon un ou plusieurs critères définissables par utilisateur, **caractérisé par**:
une unité de surveillance de trafic (31) qui surveille et compte les paquets de données qui passent ladite unité de contrôleur centralisé (14);
une unité de reconfiguration (32) qui calcule une nouvelle police de distribution de ressources sur la base du trafic surveillé si la police de distribution de ressources réelle n'est pas conforme au besoin en ressources surveillé pour les diverses catégories de trafic et qui démarre une période de rafraîchissement d'une longueur appropriée;
une unité de marquage (33) qui marque les paquets de données sur les noeuds affectés pendant ladite période de rafraîchissement où les partages de paquets de données marqués qui appartiennent aux diverses classes de trafic correspondent aux valeurs de partage de la nouvelle police de distribution de ressources.

9. Agencement (40), dans un réseau de communication basé sur paquets (10) comprenant une pluralité d'unités de réseau (13a-13e) connectées à ladite unité de contrôleur (14) au moyen de voies de transmission assurant des ressources selon la forme d'une capacité de transmission pour transporter des données par paquets, lesquelles peuvent être catégorisés selon un ou plusieurs critères définissables par utilisateur, **caractérisé par**:
une unité de détection (41) qui détecte des paquets de données arrivants qui ont été marqués en tant que paquets de rafraîchissement;
une minuterie (42) qui est activée pour indiquer la longueur d'une période de rafraîchissement si un paquet de données marqué a été reçu;
une unité de détermination (43) pour des paquets de données qui sont reçus pendant la période de rafraîchissement pour analyser leur classe de trafic et pour compter le nombre de paquets de données qui ont été reçus pour chaque classe de trafic;
un planificateur (44) qui est activé après que la minuterie (42) a son temps qui s'est écoulé afin de retrouver les valeurs de partage de la nouvelle police de distribution de ressources à partir des rapports des nombres comptés de paquets de données marqués pour les diverses classes de trafic et du nombre total de paquets de données marqués reçus pendant la période d'observation.
